Europäisches Patentamt

European Patent Office

Office européen des brevets

(19)

(11) Veröffentlichungsnummer: **0 088 862**
A1

# (12) EUROPÄISCHE PATENTANMELDUNG

(21) Anmeldenummer: **83100121.9**

(22) Anmeldetag: **08.01.83**

(51) Int. Cl.³: **H 04 B 3/54**
H 04 L 27/18, H 02 J 13/00

(30) Priorität: **15.03.82 CH 1603/82**

(43) Veröffentlichungstag der Anmeldung:
**21.09.83 Patentblatt 83/38**

(84) Benannte Vertragsstaaten:
**BE DE FR GB NL SE**

(71) Anmelder: **LGZ LANDIS & GYR ZUG AG**

**CH-6301 Zug(CH)**

(72) Erfinder: **Adame, Javier**
**Hofstrasse 33**
**CH-6300 Zug(CH)**

(72) Erfinder: **Weber, Albert**
**Furrenstrasse 17**
**CH-6314 Unterägeri(CH)**

(54) System zur Uebertragung eines Impulstelegramms hoher Baudrate über die Leitungen eines Niederspannungs-Energieversorgungsnetzes.

(57) Das System besteht aus mindestens zwei Sende/Empfangs-Geräten (1; 4). Ein Sendeteil (9) enthält einen Sendermodulator und einen Kodierer. Bei einem zu übertragenden Bit "1" wird der Logikwert des zeitlich vorhergehenden Zustandes eines Modulationssignals am Modulationseingang des Sendermodulators umgekehrt und bei einem zu übertragenden Bit "0" bleibt er dagegen unverändert. Im Sendermodulator erfolgt eine Phasenumtastung um 180° der Trägertaktfrequenz je nachdem, ob ein Bit "1" oder ein Bit "0" am Modulationseingang des Sendermodulators ansteht. Ein Empfangsteil (10) enthält einen kombinierten Dekodierer/Demodulator, während in einem Taktgenerator (8) ein Bittakt- und ein Schiebetaktsignal erzeugt wird. Ein gemeinsames Netzanschlussteil (11) wird sowohl beim Senden als auch beim Empfang verwendet.

Fig. 2

Croydon Printing Company Ltd.

System zur Uebertragung eines Impulstelegramms hoher Baudrate über die Leitungen eines Niederspannungs-Energieversorgungsnetzes

## Anwendungsgebiet und Zweck

Die Erfindung bezieht sich auf ein System zur Uebertragung eines Impulstelegramms hoher Baudrate über die Leitungen eines Niederspannungs-Energieversorgungsnetzes mit Hilfe von Trägertaktfrequenzen im Kilometerwellenbereich. Solch ein System wird z.B. benutzt innerhalb grosser Gebäude, wie z.B. Hotels, zur schnellen Uebertragung interner Daten, ohne dass dafür eigene Drahtleitungen verlegt werden müssten.

## Stand der Technik

Es ist gemäss der US-PS 3 909 618 bekannt, für solche Systeme Amplituden- oder Frequenzmodulation zu verwenden, deren Trägerfrequenzen im Bereich von 50 kHz bis 500 kHz liegen. Bei hohen Uebertragungsraten, von z.B. 1200 Bd, genügen derartig modulierte Uebertragungskanäle bei sehr stark gestörtem Niederspannungs-Energieversorgungsnetz in der Regel nicht, um eine fehlerfreie Informationsübertragung zu gewährleisten. Es sind daher in der Regel Sendewiederholungen nötig, die wiederum die Uebertragungsrate verschlechtern.

## Aufgabe und Lösung

Der Erfindung liegt die Aufgabe zugrunde, die Uebertragungsqualität bzw. -sicherheit solcher Uebertragungssysteme bei hohen Baudraten von z.B. 1200 Bd zu verbessern, so dass keine Sendewiederholungen mehr benötigt werden, um eine fehlerfreie Uebertragung sicherzustellen.

Die genannte Aufgabe wird erfindungsgemäss durch die im Kennzeichen des Anspruchs 1 angegebenen Merkmale gelöst.

./.

PA 2189

Ein Ausführungsbeispiel der Erfindung ist in der Zeichnung dargestellt und wird im folgenden näher beschrieben.

Es zeigen: Fig. 1 ein Blockschaltbild eines Uebertragungssystems,

Fig. 2 ein Blockschaltbild eines Sende/Empfangs-Gerätes,

Fig. 3 ein Blockschaltbild eines Taktgenerators,

Fig. 4 ein Blockschaltbild eines Sendeteiles,

Fig. 5 ein Blockschaltbild eines Empfangsteils,

Fig. 6 ein Blockschaltbild eines Netzanschlussteils und

Fig. 7 Impulsdiagramme verschiedener Signale.

Gleiche Bezugszahlen bezeichnen in allen Figuren der Zeichnung gleiche Teile. Alle in der Beschreibung mit MC... benannten Bauelemente sind solche der Firma Motorola, Phoenix, Arizona und alle mit LM... bezeichneten solche der Firma National Semiconductor, Santa Clara, California.

Beschreibung

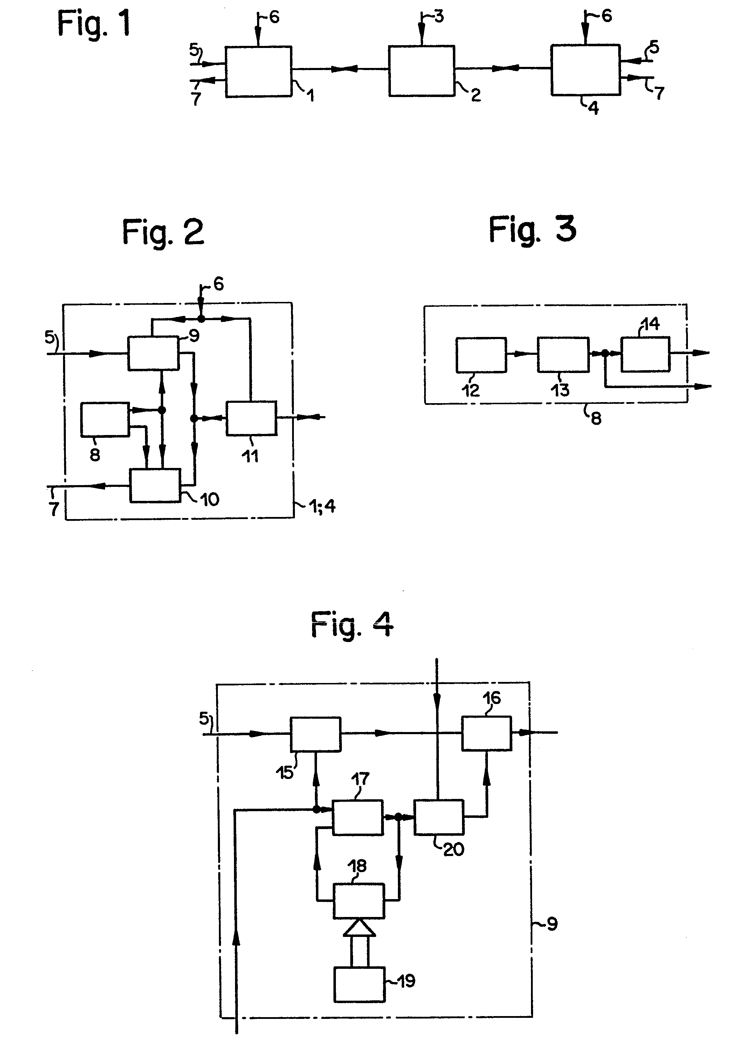

Das in der Fig. 1 schematisch dargestellte Uebertragungssystem enthält ein erstes Sende/Empfangs-Gerät 1, das über ein Niederspannungs-Energieversorgungsnetz 2, welches durch Netzstörer 3 möglicherweise stark gestört ist, mit mindestens einem zweiten Sende/Empfangs-Gerät 4 verbunden ist. Alle Sende/Empfangs-Geräte sind identisch aufgebaut und besitzen zusätzlich zu ihrer Netzverbindung noch je einen Dateneingang 5 und einen Steuereingang 6 sowie einen Auswerteausgang 7.

In der Fig. 2 ist ein Sende/Empfangs-Gerät 1 bzw. 4 dargestellt. Es besteht aus einem Taktgenerator 8, einem Sendeteil 9, einem Empfangsteil 10 und einem Netzanschlussteil 11. Der Taktgenerator 8 besitzt einen Bittaktausgang und einen Schiebetaktausgang. Der erstere speist je einen Bittakteingang des Sende-

./.

PA 2189

teils 9 und des Empfangsteils 10, der letztere dagegen einen Schiebetakteingang des Empfangsteils 10. Der Steuereingang 6 des Sende/Empfangs-Gerätes 1 bzw. 4 liegt am jeweiligen Steuereingang des Sendeteils 9 und des Netzanschlussteils 11. Miteinander verbunden sind der Ausgang des Sendeteils 9, der Eingang des Empfangsteils 10 und ein erster Eingang/Ausgang des Netzanschlussteils 11. Der zweite Eingang/Ausgang des letzteren bildet den Netzanschluss-Eingang/Ausgang, ein Dateneingang des Sendeteils 9 den Dateneingang 5 und der Ausgang des Empfangsteils 10 den Auswerteausgang 7 jeweils des Sende/Empfangs-Gerätes 1 bzw. 4.

Der in der Fig. 3 dargestellte Taktgenerator 8 besteht aus einem Oszillator 12, dessen Ausgang den Eingang eines ersten Frequenzteilers 13 speist und dessen Ausgang seinerseits den Schiebetaktausgang des Taktgenerators 8 bildet und am Eingang eines zweiten Frequenzteilers 14 liegt. Der Ausgang des letzteren ist gleichzeitig der Bittaktausgang des Taktgenerators 8.

Der in der Fig. 4 dargestellte Sendeteil 9 besteht aus einem Kodierer 15, einem Modulator 16, einem ersten Phasenregler 17, einem dritten Frequenzteiler 18, einem ersten Programmierer 19 und einem Analogschalter 20. Der Dateneingang des Sendeteils 9 liegt am Eingang des Kodierers 15, sein Steuereingang an demjenigen des Analogschalters 20 und sein Bittakteingang am Takteingang des Kodierers 15 und an einem Sollwert-Eingang des ersten Phasenreglers 17. Der Ausgang des letzteren speist einerseits den Eingang des dritten Frequenzteilers 18 und andererseits über den Analogschalter 20 den Trägereingang des Sendemodulators 16. Miteinander verbunden sind zusätzlich mittels einer Eindraht-Verbindung der Ausgang des Kodierers 15 mit dem Modulationseingang des Sendemodulators 16, dessen Ausgang den Ausgang des Sendeteils 9 bildet, und der Ausgang des dritten Frequenzteilers 18 mit einem Istwert-Eingang des ersten Phasenreglers 17 sowie mittels einer z.B. 8 Bit-Busverbindung der Ausgang des ersten Programmierers 19 mit den Parallel-Eingängen des dritten Frequenzteilers 18.

./.

PA 2189

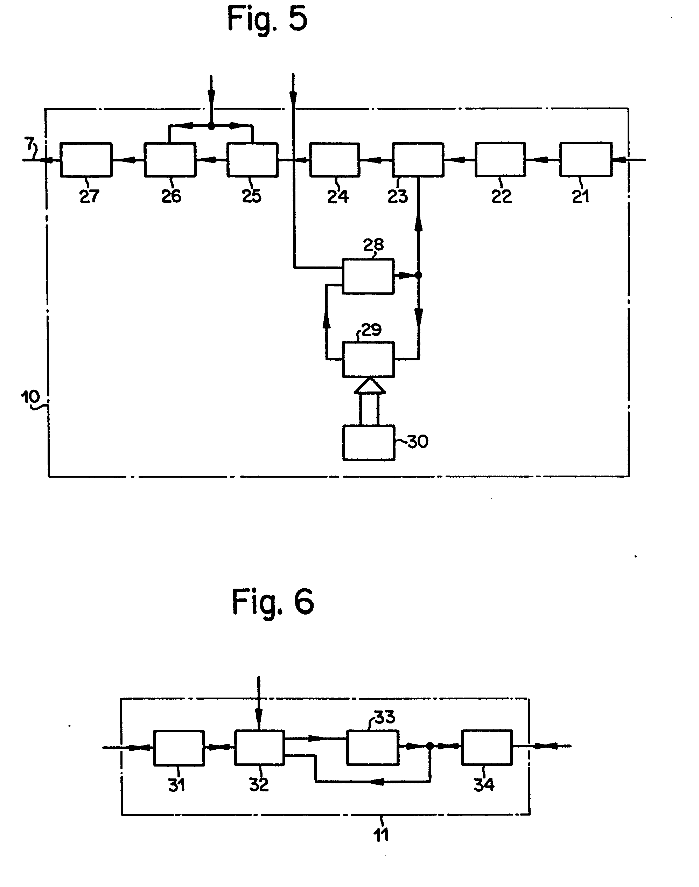

Das in der Fig. 5 dargestellte Empfangsteil 10 besteht aus einem Verstärker 21, einem Rechteckformer 22, einem Mischer 23, einem ersten Bandpassfilter 24, einer Synchronisierschaltung 25, einem Dekodierer/Demodulator 26, einem Tiefpassfilter 27, einem zweiten Phasenregler 28, einem vierten Frequenzteiler 29 und einem zweiten Programmierer 30. Der Eingang des Empfangsteils 10 liegt am Eingang des Verstärkers 21, sein Bittakteingang an einem Sollwert-Eingang des zweiten Phasenreglers 28, sein Schiebetakteingang am jeweiligen Takteingang der Synchronisierschaltung 25 und des Dekodierer/Demodulators 26. Der Ausgang des Verstärkers 21 ist in der angegebenen Reihenfolge über den Rechteckformer 22, den Mischer 23, das Bandpassfilter 24, die Synchronisierschaltung 25, den Dekodierer/Demodulator 26 und das Tiefpassfilter 27 mit dem Ausgang des Empfangsteils 10 verbunden. Der Ausgang des zweiten Phasenreglers 28 speist einerseits den Trägereingang des Mischers 23 und andererseits den Eingang des vierten Frequenzteilers 29, wobei der Ausgang des letzteren seinerseits an einem Istwert-Eingang des zweiten Phasenreglers 28 liegt. Der Ausgang des zweiten Programmierers 30 ist mittels einer z.B. 8 Bit-Busverbindung auf die Paralleleingänge des vierten Frequenzteilers 29 geführt.

Das in der Fig. 6 dargestellte Netzanschlussteil 11 besteht aus einem zweiten Bandpassfilter 31, einem Analogumschalter 32, einem Leistungsverstärker 33 und einer Ankopplung 34. Der erste Eingang/Ausgang des Netzanschlussteils 11 liegt über das zweite Bandpassfilter 31 am gemeinsamen mittleren Anschluss des Analogumschalters 32, über dessen Oeffnungskontakt er einerseits mit dem Eingang des Leistungsverstärkers 33 verbunden ist und über dessen Schliesskontakt er andererseits auf den Ausgang dieses Leistungsverstärkers 33 und auf den ersten Eingang/Ausgang der Ankopplung 34 geschaltet ist. Der zweite Eingang/Ausgang der letzteren bildet den zweiten Eingang/Ausgang des Netzanschlussteils 11 und dessen Steuereingang liegt am Steuereingang des Analogumschalters 32.

./.

Die verschiedenen Baugruppen können z.B. mit Hilfe der folgenden, nicht gezeichneten, käuflich erhältlichen Bauelemente aufgebaut werden:

- Der Oszillator 12 und der Verstärker 21 mittels eines MC14007.

- Der erste und der zweite Frequenzteiler 13 und 14 zusammen mittels eines einzigen MC14040.

- Der Kodierer 15 mittels eines D-Flip Flop MC14013, dessen D-Eingang ein zweieingängiges Exklusiv-Oder-Gatter MC14070 vorgeschaltet ist, dessen erster Eingang am Q-Ausgang des D-Flip Flop liegt.

- Der Modulator 16 mittels eines D-Flip Flop MC14013, dessen Q-Ausgang mit einem ersten Eingang und dessen Takteingang mit einem zweiten Eingang eines zweieingängigen Exklusiv-Oder-Gatters MC14070 verbunden ist.

- Die beiden Phasenregler 17 und 28 je mittels eines MC14046.

- Der dritte und der vierte Frequenzteiler 18 und 29 mittels je einer Kaskadenschaltung zweier 4 Bit-Binärzähler MC14526.

- Die beiden Programmierer 19 und 30 mittels mehrerer "Dual-in Line"-Schalter an deren Kontakteingänge Logikwerte "1" oder "0" anstehen.

- Der Analogschalter 20 und der Analogumschalter 32 mittels MC14066.

- Der Rechteckformer 22 mittels eines Komparators LM339.

- Der Mischer 23 mittels eines Exklusiv-Oder-Gatters MC14070.

./.

- Das erste Bandpassfilter 24 als Aktiv-Filter mittels eines Operationsverstärkers LM324 und eines nachgeschalteten Schmitt-Triggers MC14093.

- Die Synchronisierschaltung 25 mittels eines D-Flip Flop MC 14013.

- Der Dekodierer/Demodulator 26 mittels eines Schieberegisters MC14517, dessen serieller Datenausgang mit einem ersten Eingang und dessen serieller Dateneingang mit einem zweiten Eingang eines zweieingängigen Exklusiv-Oder-Gatters MC14070 verbunden ist.

- Das Tiefpassfilter 27 mittels eines RC-Gliedes, dessen Widerstand z.B. den Wert 20 kΩ und dessen Kondensator z.B. den Wert 3nF besitzt.

- Die Ankopplung 34 mittels eines Transformators, dessen beiden Wicklungen je ein Kondensator vorgeschaltet ist und dessen mit dem Energieversorgungsnetz verbundener Sekundärwicklung ein VDR-Widerstand parallelgeschaltet ist.

- Der Leistungsverstärker 33 mittels bipolarer Transistoren und anderer diskreter Bauelemente gemäss irgendeiner bekannten Schaltung der Elektronik.

- Das zweite Bandpassfilter 31 mittels eines Transformators und eines Kondensators ebenfalls gemäss irgendeiner bekannten Schaltung der Elektronik.

Der Leistungsverstärker 33 und das zweite Bandpassfilter 31 sind nicht Gegenstand eines Schutzbegehrens.

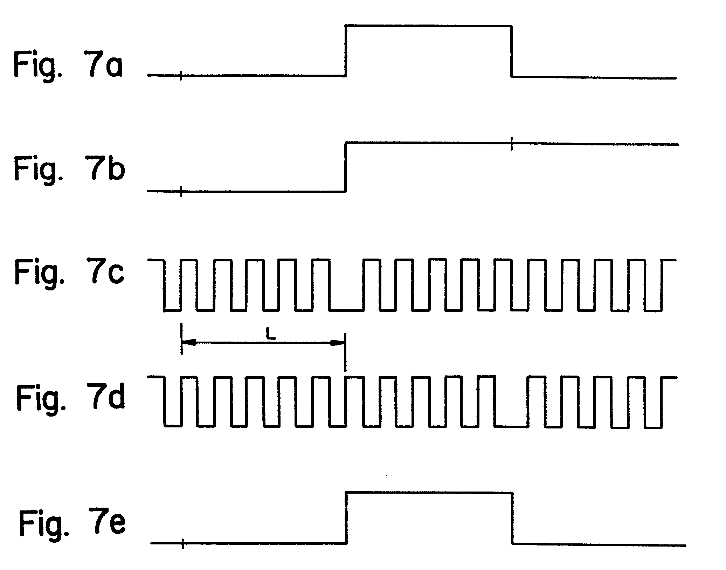

Die Fig. 7 wird später anhand der Funktionsbeschreibung beschrieben.

PA 2189

## Funktionsbeschreibung

Gemäss der Fig. 1 wird ein unmoduliertes, niederfrequentes Impulstelegramm dem Dateneingang 5 des ersten Sende/Empfangs-Gerätes 1 zugeleitet, in diesem kodiert, moduliert, verstärkt und gefiltert, und das so aufbereitete Impulstelegramm anschliessend mit einer Uebertragungsrate in der Grössenordnung von 1200 Bd über die Leitungen des Niederfrequenz-Energieversorgungsnetzes 2 übertragen, wo es möglicherweise sehr stark durch Netzstörer 3 gestört und verfälscht wird. In mindestens einem zweiten Sende/Empfangs-Gerät 4 wird das so gesendete Signal empfangen, verstärkt, gefiltert, demoduliert und dekodiert um anschliessend als demoduliertes niederfrequentes Impulstelegramm dem Auswerteausgang 7 des zweiten Sende/Empfangs-Gerätes 4 zur weiteren Auswertung zugeführt zu werden. Sendet umgekehrt das zweite Sende/Empfangs-Gerät 4, so empfängt mindestens das erste Sende/Empfangs-Gerät 1 das gesendete modulierte 1200 Bd-Impulstelegramm und führt anschliessend das empfangene demodulierte Impulstelegramm seinem Auswerteausgang 7 zu.

Gemäss der Fig. 2 werden mit Hilfe des Taktgenerators 8 zwei Taktsignale erzeugt, wovon eines - ein Bittaktsignal - sowohl dem Sendeteil 9 als auch dem Empfangsteil 10 zugeleitet wird, während das zweite - ein Schiebetaktsignal - nur den Empfangsteil 10 speist. Ein rechteckförmiges Taktsignal z.B. der Frequenz 4,9152 MHz wird gemäss der Fig. 3 in dem quarzgesteuerten Oszillator 12 erzeugt, anschliessend seine Frequenz mittels des ersten Frequenzteilers 13 z.B. durch $2^5$ geteilt zur Erzeugung des Schiebetaktsignals, dessen Frequenz dann gleich 153,6 kHz ist. Die Frequenz dieses Schiebetaktsignals wird mit Hilfe des zweiten Frequenzteilers 14 z.B. durch $2^7$ geteilt zur Generierung des Bittaktsignals, dessen Frequenz dann 1200 Hz beträgt.

Das unmodulierte Impulstelegramm speist nach Fig. 4 den Dateneingang des Kodierers 15, d.h. den zweiten Eingang von dessen Exklusiv-Oder-Gatter, und erreicht über dieses Gatter den

./.

PA 2189

D-Eingang von dessen D-Flip Flop. Der Takteingang des letzteren wird über den Bittakteingang des Sendeteils 9 vom Bittaktsignal gespeist und durch die Rückkopplung des Q-Ausgangs des D-Flip Flop, auf den ersten Eingang des erwähnten Exklusiv-Oder-Gatters so kodiert, dass der Logikwert des zeitlich vorhergehenden Zustandes des Ausgangssignals des D-Flip Flop und damit des Kodierers 15 jedesmal umgekehrt wird, wenn ein Bit "1" zu übertragen ist, und unverändert bleibt, wenn ein Bit "0" zu übertragen ist.

Der erste Phasenregler 17, der dritte Frequenzteiler 18 und der erste Programmierer 19 bilden zusammen gemäss der Fig. 4 einen bekannten synchronen Frequenzvervielfacher, der auf bekannte Weise die Bittaktfrequenz am Sollwert-Eingang des ersten Phasenreglers 17 mit einer im ersten Programmierer 19 programmierten und gespeicherten Binärzahl multipliziert zur Erzeugung eines mit der Bittaktfrequenz synchronen rechteckförmigen Trägertaktsignals, dessen Taktfrequenz im Kilometerwellenbereich von 30 kHz bis 300 kHz liegt. Der dritte Frequenzteiler 18 teilt die Trägertaktfrequenz durch die oben erwähnte Binärzahl und bildet so an seinem Ausgang ein Istwertsignal, dessen Frequenz gleich derjenigen des Bittaktsignals am Sollwert-Eingang ist und dessen Phase zur Erzeugung des Synchronismus im ersten Phasenregler 17 mit der Phase des Bittaktsignals verglichen wird, und zwar so, dass die Phasendifferenz beider Signale auf Null ausgeregelt wird.

Jedes Sende/Empfangs-Gerät 1 bzw. 4 besitzt einen Steuereingang 6 (siehe Fig. 1 und Fig. 2), mit dessen Hilfe das Sende/Empfangs-Gerät 1 bzw. 4 auf Senden geschaltet wird. Dies geschieht einerseits mittels des Analogschalters 20 der Fig. 4, der das Trägertaktsignal vom Ausgang des ersten Phasenreglers 17 auf den Trägereingang des Sendermodulators 16 schaltet und damit diesen in Betrieb nimmt, und andererseits mittels des Analogumschalters 32 der Fig. 6, der die während des Empfangs immer vorhandene Ueberbrückung des Leistungsverstärkers 33 aufhebt und letzteren in Funktion setzt.

./.

PA 2189

Der Sendermodulator 16 besteht z.B., wie bereits erwähnt, aus einem D-Flip Flop, dessen Q-Ausgang mit dem ersten Eingang und dessen Takteingang, der den Trägereingang des Sendermodulators 16 bildet, mit dem zweiten Eingang eines Exklusiv-Oder-Gatters verbunden ist. Der D-Eingang dieses D-Flip Flop stellt den vom Kodierer 15 gespeisten Modulationseingang und der Ausgang dieses Exklusiv-Oder-Gatters den Ausgang des Sendermodulators 16 dar. Jedesmal, wenn das kodierte Modulationssignal seinen Logikwert ändert, entsteht am Modulatorausgang ein Phasensprung von 180°. Der D-Flip Flop dient nur der Synchronisation und kann möglicherweise weggelassen werden.

Wie aus der Fig. 2 ersichtlich, wird der Netzanschlussteil 11, dessen Aufbau an sich bekannt und in der Fig. 6 dargestellt ist, gemeinsam für das Senden und den Empfang benutzt. Beim Senden wird gemäss der Fig. 6 das Ausgangssignal des Sendermodulators 16, das gleichzeitig dasjenige des Sendeteils 9 und damit das Eingangssignal des Netzanschlussteils 11 ist, im zweiten Bandpassfilter, dessen Bandbreite z.B. 2,4 kHz beträgt, gefiltert und anschliessend über den Analogumschalter 32 dem Leistungsverstärker 33 zugeführt. Das in diesem verstärkte Signal erreicht schliesslich über die Ankopplung 34, die der galvanischen Trennung und niederohmigen Einspeisung dient, die Leitungen des Niederspannungs-Energieversorgungsnetzes 2.

Das System arbeitet im Halbduplex-Betrieb, so dass nach Beendigung der Sendung das Sende/Empfangs-Gerät 1 bzw. 4 wieder auf Empfang geschaltet und somit der Leistungsverstärker 33 wieder überbrückt wird. Ein möglicherweise vorhandenes Empfangssignal erreicht dann über die Ankopplung 34, den Analogumschalter 32 und das zweite Bandpassfilter 31 den Eingang des Empfangsteils 10, welches in der Fig. 5 dargestellt ist. Das im Netzanschlussnetzteil 11 somit gebildete Empfangssignal wird im Verstärker 21 verstärkt, die Impulsflankensteilheiten anschliessend mittels des Rechteckformers 22 neu gebildet und entweder der Synchronisierschaltung 25 direkt (in der Fig. 5 nicht dargestellt) oder über einen Frequenzumformer zugeleitet.

./.

Letzterer dient der Umwandlung der Trägerfrequenz in eine Zwischentaktfrequenz und besteht aus dem Mischer 23, dem ersten Bandpassfilter 24 und einem synchronen Frequenzvervielfacher, bestehend aus dem zweiten Phasenregler 28, dem vierten Frequenzteiler 29 und dem zweiten Programmierer 30. Dieser synchrone Frequenzvervielfacher ist gleich aufgebaut und arbeitet auf die gleiche Weise wie derjenige des Sendeteils, nur das hier aus der Bittaktfrequenz nicht die Trägertaktfrequenz $f_T$, sondern eine Taktfrequenz $(f_T - f_Z)$ oder $(f_T + f_Z)$ erzeugt wird, wobei die Zwischentaktfrequenz $f_Z$ z.B. gleich 9,6 kHz gewählt ist. Das im Mischer 23 erzeugte modulierte Zwischenfrequenzsignal wird im ersten Bandpassfilter 24, dessen Bandbreite z.B. wieder 2,4 kHz beträgt, gefiltert und dient der Reduktion der Länge des Schieberegisters des Dekodierer/Demodulators 26. Die z.B. aus einem weiteren D-Flip Flop bestehende Synchronisierschaltung 25 synchronisiert ihr am D-Eingang anstehendes Eingangssignal mit ihrem am Takteingang des D-Flip Flop anstehenden Schiebetaktsignal, dessen Taktfrequenz z.B. den $2^4$-fachen Wert der Zwischentaktfrequenz $f_Z$ = 9,6 kHz nämlich 153,6 kHz besitzt. Das synchronisierte Signal wird dem Dekodierer/Demodulator 26 zugeleitet, der z.B. aus einer Kaskadenschaltung eines Empfängerdemodulators mit einem nachgeschalteten Dekodierer besteht. Einfacher ist es jedoch, Demodulator und Dekodierer zu einem Dekodierer/Demodulator zu kombinieren und wie bereits erwähnt mittels eines digitalen Schieberegisters mit anschliessendem Exklusiv-Oder-Gatter zu realisieren.

Die Länge L des Schieberegisters in Bit ohne Verwendung einer Zwischentaktfrequenz genügt der Beziehung:

$$L = \frac{f_S}{f_B} = \frac{f_S}{f_T} \cdot \frac{f_T}{f_B},$$

wobei $f_S$ die Schiebetaktfrequenz und $f_B$ die Bittaktfrequenz darstellt.

./.

PA 2189

Der erste Faktor $(f_S/f_T)$ bestimmt die Abtastrate des Trägerfrequenzsignals; je grösser diese Rate ist, umso kleiner ist der Quantisierungsfehler. Demnach sollte $(f_S/f_T)$ mindestens gleich zehn sein. Der zweite Faktor $(f_T/f_B)$ entspricht der Anzahl Zyklen der Trägertaktfrequenz innerhalb einer Bitdauer des demodulierten Signals. Diese Bitdauer entspricht der Dauer einer Korrelationszeit. Auch dieser zweite Faktor sollte gross sein. Ausserdem müssen beide Faktoren ganzzahlig sein. Werden beide Faktoren gross gewählt, so ist auch die Länge des Schieberegisters gross und letzteres dementsprechend teuer.

Es gilt z.B. für $f_B$ = 1200, $f_T$ = 130,8 kHz und $(f_S/f_T)$ = 10:

$$f_T/f_B = 130,8/1,2 = 109,$$

$$L = (f_S/f_T)\,(f_T/f_B) = 10 \cdot 109 = 1090 \text{ Bit und}$$

$$f_S = f_T \cdot 10 = 1,308 \text{ MHz.}$$

Die im Beispiel genannte Schiebetaktfrequenz von 153,6 kHz gilt somit nur bei Verwendung einer entsprechenden Zwischentaktfrequenz. In diesem Fall muss in der obigen Formel $f_T$ durch $f_Z$ ersetzt werden und es gilt mit z.B. $f_Z$ = 9,6 kHz und $(f_S/f_Z)$ = 16 > 10:

$$f_Z/f_B = 9,6/1,2 = 8$$

$$L = (f_S/f_Z)\,(f_Z/f_B) = 16 \cdot 8 = 128 \text{ Bit und}$$

$$f_S = f_Z \cdot 16 = 153,6 \text{ kHz.}$$

Die Funktionsweise des kombinierten Dekodierer/Demodulators 26 ist aus der Fig. 7 ersichtlich. Auf der Linie a der Fig. 7 ist ein unmoduliertes Impulstelegramm am Eingang des Kodierers 15 dargestellt, auf der Linie b das entsprechende kodierte Impulstelegramm am Ausgang des Kodierers 15, auf der Linie c das entsprechende

./.

PA 2189

modulierte Impulstelegramm am Ausgang des Modulators 16, auf der Linie d das entsprechende, um L Bit zeitlich verschobene, ideal empfangene Impulstelegramm am Ausgang des Schieberegisters des Dekodierer/Demodulators 26 unter der Annahme, dass keine Zwischenfrequenz verwendet wird, und auf der Linie e das entsprechende demodulierte Ausgangssignal des Dekodierer/Demodulators 26. Das empfangene demodulierte Signal der Linie e ist, wie erforderlich, gleich dem gesendeten unmodulierten Signal der Linie a.

Statt eines digitalen Schieberegisters mit einem nachgeschalteten Exklusiv-Oder-Gatter kann zum Aufbau des Dekodierer/Demodulators 26 auch ein analoges Schieberegister (CCD = Charge coupled device) mit einem nachgeschalteten analogen Multiplikator verwendet werden. In diesem Fall sind der serielle Datenausgang des analogen Schieberegisters mit einem ersten Eingang und sein serieller Dateneingang mit dem zweiten Eingang des analogen Multiplikators verbunden.

Das demodulierte Impulstelegramm wird noch im Tiefpassfilter 27 gefiltert und anschliessend dem Ausgang des Empfangsteils 10 und damit dem Auswerteausgang 7 des Sende/Empfangs-Gerätes 1 bzw. 4 zur weiteren Auswertung zugeleitet.

Zur zusätzlichen Verbesserung der Empfangsqualität kann das gleiche Impulstelegramm ohne Zeitverlust mittels mehrerer, z.B. mittels mindestens dreier, unterschiedlicher Trägertaktfrequenzen, z.B. 75,6 kHz, 104,4 kHz und 130,8 kHz, gleichzeitig dreifach gesendet werden. Dies bedingt drei Sendeteile 9, drei Empfangsteile 10 und drei zweite Bandpassfilter 31 je Sende/Empfangs-Gerät 1 bzw. 4. Die Ausgänge der drei Empfangsteile 10 müssen dann so miteinander verknüpft werden, dass eine Mehrheitsentscheidung zu Stande kommt. Sind die drei Tiefpassfilter 27 RC-Glieder, so genügt es zu diesem Zweck, alle drei Ausgänge der Empfangsteile 10 miteinander zu verbinden. Wird dagegen zum Zweck der

./.

**0088862**

Mehrheitsentscheidung ein Computer eingesetzt, so sind die Ausgänge der drei Empfangsteile 10 über je einen Schmitt-Trigger, z.B. vom Typ MC14093, mit den entsprechenden Eingängen des Computers zu verbinden. Die Werte der verwendeten Zwischentaktfrequenzen können für alle drei Trägertaktfrequenzen gleich oder unterschiedlich sein.

./.

PA 2189

PATENTANSPRUECHE

1. System zur Uebertragung eines Impulstelegramms hoher Baudrate über die Leitungen eines Niederspannungs-Energieversorgungsnetzes mit Hilfe von Trägertaktfrequenzen im Kilometerwellenbereich, dadurch gekennzeichnet, dass bei einem zu übertragenden Bit "1" der Logikwert eines Modulationssignals am Modulationseingang eines Sendermodulators (16) umgekehrt ist zum Logikwert des zeitlich vorhergehenden Zustandes und bei einem zu übertragenden Bit "0" dieser Logikwert unverändert bleibt im Verhältnis zu demjenigen seines zeitlich vorhergehenden Zustandes, und dass im Sendermodulator (16) eine Phasenumtastung der Trägertaktfrequenz um $180^{\circ}$ erfolgt, je nachdem, ob ein Bit "1" oder ein Bit "0" am Eingang des Sendermodulators (16) ansteht.

2. System nach Anspruch 1, dadurch gekennzeichnet, dass in einer Uebertragung das gleiche Impulstelegramm gleichzeitig mindestens dreimal mit unterschiedlichen Trägertaktfrequenzen enthalten ist und dass ein Empfänger dermassen ausgebildet ist, dass eine Mehrheitsentscheidung erfolgt.

3. System nach Anspruch 1 oder 2, dadurch gekennzeichnet, dass in einem Empfänger vor einer Demodulation eine Reduktion der Trägertaktfrequenz auf eine Zwischentaktfrequenz bzw. der Trägertaktfrequenzen auf eine gleiche oder mehrere verschiedene Zwischentaktfrequenzen erfolgt.

4. System nach einem der Ansprüche 1 bis 3, dadurch gekennzeichnet, dass dem Sendermodulator (16) ein Kodierer (15) vor- und einem Empfängerdemodulator ein Dekodierer nachgeschaltet ist.

5. System nach einem der Ansprüche 1 bis 3, dadurch gekennzeichnet, dass dem Sendermodulator (16) ein Kodierer (15) vorgeschaltet ist und ein Empfangsteil (10) einen kombinierten Dekodierer/Demodulator (26) enthält.

BAD ORIGINAL

6. System nach Anspruch 5, dadurch gekennzeichnet, dass der kombinierte Dekodierer/Demodulator (26) aus einem digitalen Schieberegister besteht, dessen serieller Datenausgang mit einem ersten Eingang und dessen serieller Dateneingang mit einem zweiten Eingang eines zweieingängigen Exklusiv-Oder-Gatters verbunden sind.

7. System nach Anspruch 5, dadurch gekennzeichnet, dass der kombinierte Dekodierer/Demodulator (26) aus einem analogen Schieberegister besteht, dessen serieller Datenausgang mit einem ersten Eingang und dessen serieller Dateneingang mit einem zweiten Eingang eines analogen Multiplikators verbunden sind.

8. System nach Anspruch 7, dadurch gekennzeichnet, dass das analoge Schieberegister ein "Charge coupled device" (CCD) ist.

9. System nach einem der Ansprüche 4 bis 8, dadurch gekennzeichnet, dass der Kodierer (15) aus einem D-Flip Flop besteht, dessen Q-Ausgang mit einem ersten Eingang eines zweieingängigen Exklusiv-Oder-Gatters verbunden ist, dessen Ausgang seinerseits am D-Eingang des D-Flip Flop liegt.

10. System nach einem der Ansprüche 1 bis 9, dadurch gekennzeichnet, dass der Sendermodulator (16) mindestens aus einem zweieingängigen Exklusiv-Oder-Gatter besteht.

./.

PA 2189

0088862

1/3

Fig. 1

Fig. 2

Fig. 3

Fig. 4

## Fig. 5

## Fig. 6

Fig. 7a

Fig. 7b

Fig. 7c

Fig. 7d

Fig. 7e

| | EINSCHLÄGIGE DOKUMENTE | | EP 83100121.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| Y | GB - A 2 070 396 (SANGAMO WESTON) <br> * Fig. 1-4; Seite 2, Zeile 42 - Seite 5, Zeile 8 * <br> -- | 1-5 | H 04 B 3/54 <br> H 04 L 27/18 <br> H 02 J 13/00 |
| Y | P. BOCKER "Datenübertragung, Band I", Berlin-Heidelberg-New York, 1978 <br> SPRINGER-VERLAG <br> Seiten 129,130, Kapitel 4.2.6 <br> * Gesamt * <br> -- | 1-5 | |
| Y | FR - A - 1 383 789 (C.I.T.) <br> * Fig. 1 * <br> -- | 1-5 | |
| A | US - A - 3 980 824 (LAMB) <br> * Fig. 1-3 * <br> -- | 1,4-6, 10 | RECHERCHIERTE SACHGEBIETE (Int. Cl. ³) |
| A | GB - A - 1 553 626 (JEANNINE LE GOFF) <br> * Fig. 1-3 * <br> -- | 7 | H 04 B 3/00 <br> H 04 B 7/00 <br> H 04 L 1/00 <br> H 04 L 27/00 |
| A | DD - A - 116 723 (ORION RADIO ES VILLAMOSSAGI VALLALAT) <br> * Fig. 4; Seite 3, Zeilen 19-32; Anspruch 2 * <br> ---- | 1,4-6, 9 | H 02 J 13/00 <br> G 08 C 15/00 |

Der vorliegende Recherchenbericht wurde für alle Patentansprüche erstellt.

| Recherchenort | Abschlußdatum der Recherche | Prüfer |
|---|---|---|
| WIEN | 10-06-1983 | DRÖSCHER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82